# EUROPEAN PATENT SPECIFICATION

(11) **EP 1 600 344 B1**
(45) Date of publication and mention of the grant of the patent: **31.12.2008**
(21) Application number: 05007271.9
(22) Date of filing: 04.04.2005
(51) Int. Cl.: B60T 7/06, G05G 1/14

(54) **Collapsible pedal for motor vehicles**
Zusammenklappbares Pedal für Kraftfahrzeuge
Pédalier rétractable pour véhicule automobile

(30) Priority: 27.05.2004 IT TO20040358
(43) Date of publication of application: 30.11.2005
(73) Proprietor: Sistemi Comandi Meccanici S.C.M. S.p.A., 20011 Corbetta (MI) (IT)
(72) Inventor: La Rosa, Giacomo, 90144 Palermo (IT); Cavaglia', Renato, 10040 Volvera (TO) (IT); Ballari, Marco, 10040 Gerbole Di Volvera (TO) (IT)
(74) Representative: Di Francesco, Gianni

(56) References cited:
- EP-A- 1 323 602
- WO-A-03/062029
- US-A1- 2001 006 010

## Description

The present invention refers to a pedal in motor vehicles, the pedal being of the type that collapses in case of frontal impact of the vehicle, when the impact is strong enough to be dangerous for the legs of the driver.

Pedals in motor vehicles control acceleration, braking and clutch engagement. Said pedals generally consist of an arm rotatably supported by a bracket located above the floor of the motor vehicle, means connecting the accelerator, the brakes or the clutch and the arm of the pedal, and a footboard connected to the free end of the arm of the pedal, intended to allow the driver to push the pedal.

Devices that allow the pedal to collapse are already known, these devices allowing the arm of the pedal to collapse in case the vehicle suffers a frontal impact. One of the already known devices allows to displace the articulation point of the arm of a pedal in case of frontal impact so that the legs of the driver are not severely injured. Said device is disclosed in the European Patent Applications EP-A-1 323 602 or EP-A-1.065.114.

However, the system disclosed in said application is complex and a **specially shaped** support structure is needed.

It is an object of the present invention to provide a control pedal for motor vehicles provided with a collapse system that overcomes the aforementioned problems.

Said object is achieved by means of a pedal for motor vehicles according to claim one.

The present invention and its advantages, will become more clear from the following detailed description which refers to the appended drawings illustrating a preferred embodiment of the invention, and which is provided as non-restrictive illustration, in which:
figure 1 is a side transparent view of the pedal provided with the device according to the invention,
figure 2 is a perspective front view of the pedal in figure 1,
figure 3 is a perspective rear view of the pedal according to the invention, and
figure 4 is an exploded perspective front view of the pedal provided with the device according to the invention.

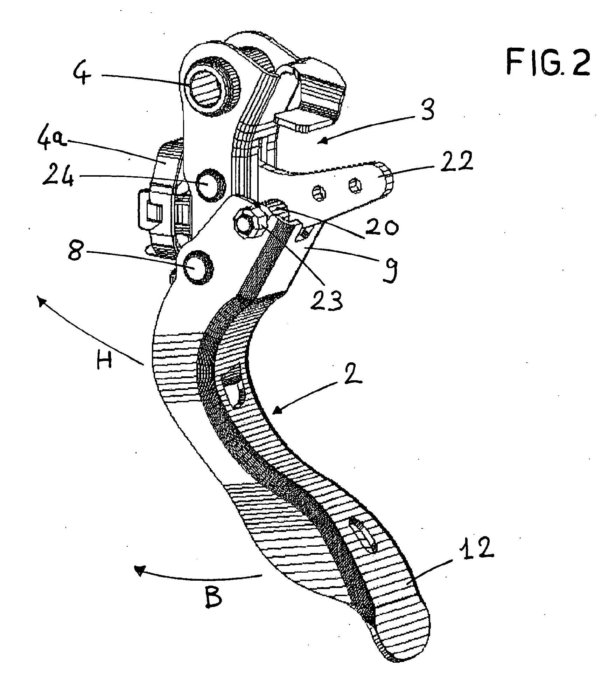

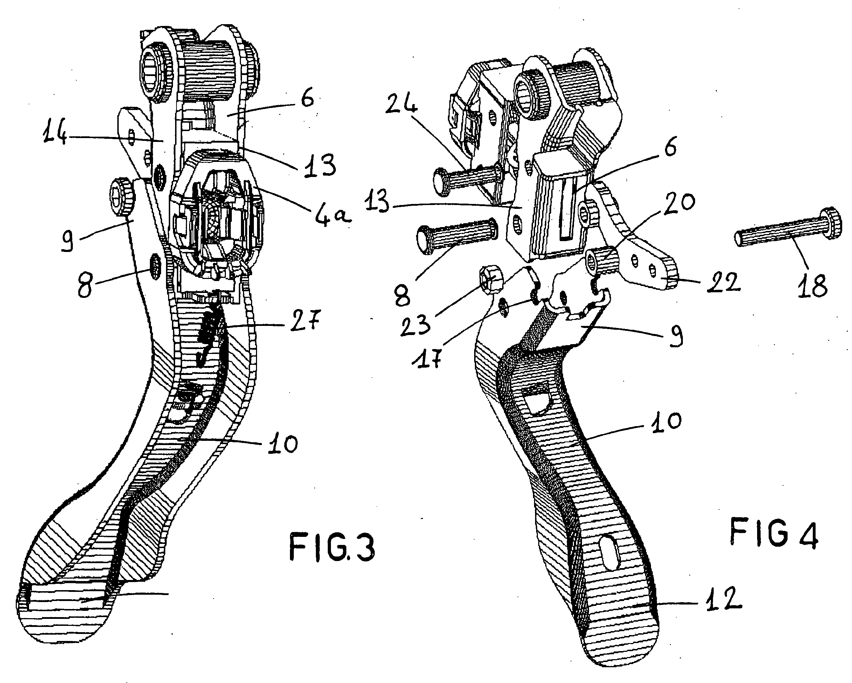

With reference to the figures, reference number 2 indicates a pedal for motor vehicles provided with the disengagement device 3. Said system allows the pedal to collapse in case of frontal impact of the motor vehicle. The pedal is pivoted, by means of a bushing 4, on a pin or through axle 5, integral with a support (not shown) connected in a known way, to a fixed point of the motor vehicle. The part of the pedal 2 connected to the axle 5 consists of said disengagement device 3. The device consists of an arm 6, the section of which is U-shaped (visible in figure 2 and figure 3), presenting at one of its ends the aforementioned bushing 4 while in its central part there is a piece 4a to snap-engage the cap of the servo brake or a different device. The other end 7 of the arm 6 is rotatably connected, by means of a through pin 8, to the upper end of the body of the pedal 10 which forms a single piece together with the foot-board 12. The transversal section of the body 10 is U-shaped so that it can house part of the arm 6 and the pin 8 passing through its side walls 13 and 14.

At the end 9 of the body 10, that is the end opposite to the one supporting the pedal 12, there is a seat 17 adapted to house a threaded pin 18 which protrudes from a bushing 20 integral with a finger-like lever 22 rotatably connected to the arm 6 by means of a through-pin 24. The threaded pin 18 is provided with a head of increased diameter and with a nut 23 which is screwed at the opposite end of the head. A traction spring 27 is connected between the arm 6 and the body 10 in order to make the body 10 rotate in the direction of the arrow H in figure 2, releasing the arm 6. The two through pins 8 and 24 represent the system by means of which the aforementioned piece 4a, engaging the cap, is fixed.

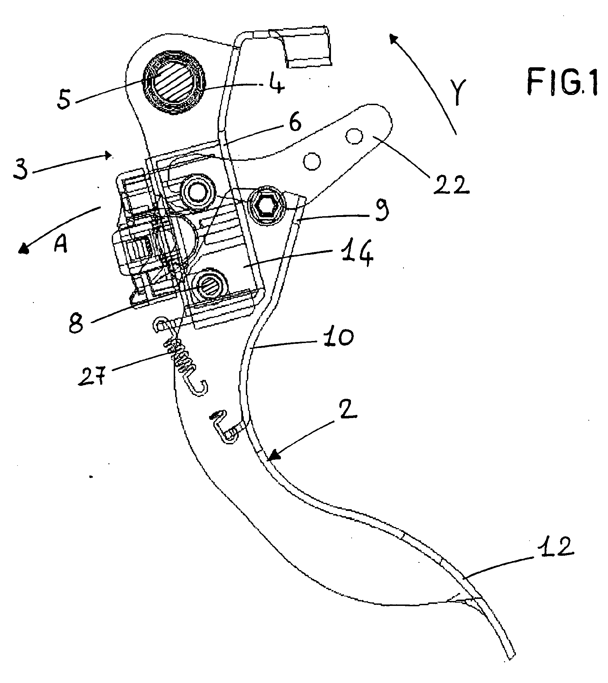

While in use, the pedal according to the invention looks like it is shown in figure 2 and the push on the foot-board 12 in the direction indicated by the arrow B, makes the whole pedal rotate on the axis 12 by means of the bushing 4. The pedal and the disengagement system remain in the assembled and active position because the rotation of the body 10 of the pedal on the pin 8, according to the arrow H (figure 1), is prevented by the fact that the threaded pin 18, inserted in the bushing 20, is inserted into the seat 17 at the end 9 of the body of the pedal 2. Said pin is retained inside the seat 17 by means of friction since the walls of the body of the pedal 10 are kept between the head of the threaded pin 18, the nut 23 and the front walls of the bushing 20.

In case of violent frontal impact, a significant deformation of the structure of the vehicle is expected, said deformation causing the displacement of the axis 5 of rotation inside the passenger compartment.

Said displacement makes the frontal wall of the lever 22 be in contact with a fixed structure of the vehicle (not shown) while the lever 22 rotates on the pin 24 in the direction of the arrow Y. The body 10 of the pedal is then free to rotate on the pin 8 pulled by the spring 27 since the threaded pin 18 comes out from the seat 17 overcoming the resistance of the friction between the nut 23, the head of the pin 18 and the front walls of the bushing 20. In this way the pedal collapses and prevents the effect of the impact to affect directly the legs of the driver.

## Claims

1. A pedal for motor vehicles consisting of an operational body (10) provided with a foot-board (12) at one of its ends and adapted to act, by means of a control means, on a control device of the motor vehicle, wherein the body (10) is rotatably engaged at the end of an arm (6), which in turn is articulated at its other end to a fixed part of the motor vehicle, said arm (6) and said body (10) being provided with means (17, 18, 20, 22) adapted to lock their mutual position still being disengageable; **characterised in that** said means consist of a **single** lever (22) rotatably engaged **at one of its ends** on the arm (6) and provided with a bushing (20) into which a threaded pin is inserted (18) the pin being adapted to become engaged into a seat (17) made on the end of the body (10) without the foot-board (12), **said** lever (22) **being** adapted to rotate in order to take the pin (18) out from the seat (17) when its **other end not engaged** with **the arm** (6) enters in contact with a fixed part of the motor vehicle as a consequence of a frontal impact.

2. A pedal as claimed in claim 1, **characterised in that** between the body (10) and said arm (6) there are means adapted to facilitate their mutual rotation, said means consisting of a traction spring (27) located between said body (10) and said arm (6).

## Patentansprüche

1. Pedal für Motorkraftfahrzeuge, bestehend aus einem Bedienungskörper (10), der mit einer Fußplatte (12) an einem seiner Enden ausgestattet ist und dazu ausgebildet ist, mit Hilfe eines Steuermittels auf eine Steuervorrichtung des Motorkraftfahrzeuges zu wirken, wobei der Körper (10) drehbar an dem Ende eines Arms (6) in Eingriff steht, der seinerseits an seinem anderen Ende gelenkig an einem feststehenden Teil des Motorkraftfahrzeuges befestigt ist, wobei der Arm (6) und der Körper (10) mit Mitteln (17, 18, 20, 22) ausgestattet sind, die dazu ausgebildet sind, ihre wechselseitige Position zu verriegeln, aber weiterhin lösbar sind; **dadurch gekennzeichnet, dass** die Mittel aus einem einzelnen Hebel (22) bestehen, der drehbar an einem seiner Enden mit dem Arm (6) in Eingriff steht, und mit einer Buchse (20) bereitgestellt ist, in die ein Gewindestift (18) eingesetzt ist, wobei der Stift dazu ausgebildet ist, in einen Sitz (17) einzugreifen, der an dem Ende des Körpers (10) ohne die Fußplatte (12) gebildet ist, wobei der Hebel (22) zur Drehung ausgebildet ist, um den Stift (18) aus dem Sitz (17) zu nehmen, wenn sein anderes Ende, das nicht mit dem Arm (6) in Eingriff steht, infolge eines Frontalaufpralls mit dem feststehenden Teil des Motorkraftfahrzeuges in Kontakt gelangt.

2. Pedal nach Anspruch 1, **dadurch gekennzeichnet, dass** zwischen dem Körper (10) und dem Arm (6) Mittel vorhanden sind, die dazu ausgebildet sind, deren wechselseitige Drehung zu erleichtern, wobei die Mittel aus einer Zugfeder (27) bestehen, die zwischen dem Körper (10) und dem Arm (6) angeordnet ist.

## Revendications

1. Pédale destinée à des véhicules motorisés, constituée d'un corps fonctionnel (10) doté d'un support pour pied (12) à une de ses extrémités et conçu pour agir, au moyen d'un moyen de commande, sur un dispositif de commande du véhicule motorisé, où le corps (10) est engagé de façon à pouvoir tourner à l'extrémité d'un bras (6), qui est à son tour articulé à son autre extrémité sur une partie fixe du véhicule motorisé, ledit bras (6) et ledit corps (10) étant dotés d'un moyen (17, 18, 20, 22) conçu pour verrouiller leur position mutuelle tout en restant cependant déverrouillables, **caractérisée en ce que** ledit moyen est constitué d'un levier unique(22) engagé de façon à pouvoir tourner à une de ses extrémités sur le bras (6) et doté d'une douille (20) dans laquelle une tige filetée est insérée (18), ladite tige étant agencée pour s'engager dans un siège (17) réalisé sur l'extrémité du corps (10) sans le support pour pied (12), ledit levier (22) étant conçu pour tourner de manière à faire sortir la tige (18) du siège (17) lorsque son autre extrémité qui n'est pas engagée avec le bras (6) vient en contact avec une partie fixe du véhicule motorisé par suite d'un impact frontal.

2. Pédale selon la revendication 1, **caractérisée en ce que,** entre le corps (10) et ledit bras (6), il existe un moyen conçu pour faciliter leur rotation mutuelle, ledit moyen étant constitué d'un ressort de traction (27) situé entre ledit corps (10) et ledit bras (6).
